# EUROPÄISCHE PATENTANMELDUNG

(11) **EP 1 113 123 A1**
(43) Veröffentlichungstag der Anmeldung: **04.07.2001**
(21) Anmeldenummer: 99126121.5
(22) Anmeldetag: 29.12.1999
(51) Int. Cl.: E04F 15/20, E04F 15/02, E04F 13/00

(54) **Schallschutz-Verbundsystem für Raumbegrenzungsflächen**

(71) Anmelder: Elsässer, Manfred, 6082 Patsch (AT)
(72) Erfinder: Elsässer, Manfred, 6082 Patsch (AT)
(74) Vertreter: Büchel, Kurt F., Dr.

(57) **Zusammenfassung**

Das Schallschutz-Verbundsystem für Raumbegrenzungsflächen besteht aus einer mit der jeweiligen Boden-, Wand- oder Deckenverkleidung (V) in Verbindung stehenden Bedämpfungsschicht (D), die vorzugsweise einen inneren Verlustfaktor η_{INT} von mindestens 0.1, insbesondere von mindestens 0.2 aufweist, und einer an der dem Raum abgekehrten Seite der Boden-, Wand- oder Deckenverkleidung (V) bzw. der Bedämpfungsschicht (D) an diese anschliessenden Trittschalldämmschicht (S), die eine dynamische Steifigkeit s' von höchstens 20 MN/m³, vorzugsweise von höchstens 10 MN/m³, aufweist. Die Boden-, Wand- oder Deckenverkleidung (V) ist vorzugsweise ein Plattenbelag einer Dicke von höchstens 40 mm, vorzugsweise höchstens 20 mm, insbesondere höchstens 10 mm, und kann zweiteilig ausgebildet sein, wobei dann z.B. wenigstens eine Bedämpfungsschicht (D) zwischen den beiden Teilen (V1, V2) angeordnet ist. Die Trittschall-Dämmschicht (S) kann als Mehrfach-Luftnoppenfolie - gegebenenfalls mit wenigstens einer Zwischenlage - ausgebildet sein, die Bedämpfungsschicht (D) eine Dichte von > 1600 kg/m³, vorzugsweise von > 2000 kg/m³, und/oder ein Flächengewicht von > 5 kg/m², vorzugsweise von > 10 kg/m², aufweisen.

## Beschreibung

Aus der Bauphysik ist bekannt, dass sich im Bauwesen ausreichender Trittschallschutz von Trennbauteilen bei gleichzeitig realistischen Bauteilmassen nur durch mehrschalige - in der Regel zweischalige - Bauteile oder durch die Kombination schwerer einschaliger Trenndecken mit weichfedernden Gehbelägen erreichen lassen. Zweischalige Trenndecken sind im allgemeinen in Form von schwimmenden Estrichen ausgeführt und bedingen daher in der Regel relativ grosse Konstruktionshöhen, die insbesondere in der Altbausanierung mit meist vorgegebenen Anschlusshöhen praktisch kaum realisierbar sind. Bei der Berechnung des für den Mindest-Trittschallschutz des Gesamtaufbaus erforderlichen Trittschall-Verbesserungsmasses VM_{erf} mehrschichtiger Deckenauflagen dürfen weichfedernde Gehbeläge nicht in allen europäischen Ländern herangezogen werden. Sie sind ausserdem teilweise für den Einsatz insbesondere in Nassbereichen (Bädern) ungeeignet oder nicht akzeptabel.

In letzter Zeit kommen hingegen immer mehr relativ dünne, steife Bodenbeläge und Wandverkleidungen zum Einsatz, z.B. aus Holz- bzw. Press-Spanplatten in Dielenformaten mit extrem harten Oberflächen, z.B. auch aus Kunststoff-Laminaten. Das Verhalten dieser - einschalig wirkenden - Boden- bzw. Wandbeläge ist in besonderem Masse hinsichtlich der Trittschallabstrahlung in den begangenen Raum selbst kritisch und subjektiv unangenehm.

In Deutschland und Osterreich sind schwimmende Estriche trittschallschutztechnische Standardausführungen. Bodenbeläge dürfen allerdings wegen deren Alterung und der Möglichkeit der Austauschbarkeit für den schalltechnischen Nachweis des Mindest-Trittschallschutzes nicht herangezogen werden. Die Resonanzfrequenz weichfedernder Gehbeläge sinkt mit steigender Berührungszeit; diese ist wiederum abhängig von der Eindringtiefe des anregenden Gegenstandes in die Belagsschicht, und diese wiederum ist natürlich von den Abmessungen und der Masse des Trittschallerregers abhängig. Dieser Zusammenhang ist auch die Ursache dafür, dass Messergebnisse bezüglich der Pegelminderungen durch Gehbeläge mittels des Normhammerwerkes und beim Begehen desselben Trenndeckenaufbaus grundsätzlich voneinander abweichen.

Dünne steife Gehbeläge werden in der Baupraxis, wenn sie eine ausreichende Lastverteilung gewährleisten, auch schwimmend verlegt und könnten damit grundsätzlich eine Zwischenlösung aus einem schwimmenden Estrich und einem weichfedernden Gehbelag darstellen. Die Nachteile solcher Gehbeläge im Hinblick auf den Trittschallschutz liegen derzeit allerdings meist noch darin, dass
- einerseits im allgemeinen die Masse der lastverteilenden Schicht relativ klein ist und damit zur Erzielung eines akzeptablen Trittschallverbesserungsmasses des zweischaligen Aufbaus die dynamische Steifigkeit der Zwischenschicht deutlich kleiner als 10 MN/ m³ sein muss, was mit herkömmlichen Trittschalldämmstoffen nur in Verbindung mit eher grossen Schichtdicken zu erzielen ist, welche wiederum grosse Konstruktionshöhen zur Folge haben.
- andererseits das Trittschallverhalten des steifen einschaligen Gehbelages selbst aufgrund der zusätzlich meist sehr harten Oberflächenschicht, der damit verbundenen geringen Eindringtiefe des Trittschallerregers (kurze Berührungszeiten) und der daraus resultierenden ungünstigen Resonanzfrequenz - schon subjektiv feststellbar - äusserst unbefriedigend ist. Dies macht sich oft auch durch unangenehme Gehgeräusche ("Klappern") im begangenen Raum bemerkbar.

In der für den schalltechnischen Nachweis massgeblichen DIN 4109 sind Beispiele für trittschallmindernde Deckenauflagen angegeben. Z.B. darf für Holzunterböden aus mindestens 22 mm dicken Holzspanplatten, vollflächig schwimmend verlegt auf Faserdämmstoffen mit einer dynamischen Steifigkeit s' von höchstens 10 MN/m³, mit einem Trittschallverbesserungsmass von immerhin 25 dB gerechnet werden. Dies zeigt aber bereits auf, dass zur Erzielung von Verbesserungsmassen in derselben Grössenordnung in Verbindung mit deutlich dünneren - z.B. Holz- bzw. Laminat-Bodenbelägen besondere Massnahmen erforderlich sind.

Die Erfindung hat sich daher die Aufgabe gestellt, ein Schallschutz-Verbundsystem zu schaffen, das sowohl den Trittschallschutz als auch die Raumakustik verbessert, und zwar insbesondere bei dünnen, harten Gehbelägen bzw. Wand- oder Deckenverkleidungen. Diese Aufgabe wird durch die Kombination der in Anspruch 1 gegebenen Massnahmen gelöst. Weiterentwicklungen und Verbesserungen des Erfindungsgedankens sind in den Kennzeichen der abhängigen Ansprüche wiedergegeben. Wenn in der vorliegenden Anmeldung von Trittschallschutz die Rede ist, dann ist damit im Falle von Wand- oder Deckenverkleidungen sinngemäss auch immer der Schallschutz schlechthin zu verstehen.

Die Kombination einer das Abstrahlverhalten der steifen, trittschallharten Beläge positiv beeinflussenden, dünnen Bedämpfungsschicht mit einer - vorzugsweise ebenfalls relativ dünnen Schalldämmschicht, insbesondere aus einer mit Gas- bzw. Luft gefüllter Noppenfolie - kann die schallschutztechnischen Vorteile zweischaliger Konstruktionen mit den vor allem für den Sanierungsbereich vorteilhaften kleinen Konstruktionshöhen sinnvoll nutzen.

Nun sind Luftnoppenfolien für den Trittschallschutz unter schwimmenden Estrichen schon bekannt geworden, z.B. aus der DE-A1-2841208 oder der CH-B-645968; raumakustisch oder luftschallschutztechnisch bieten diese Vorschläge aber keine adäquate Lösung.

Andererseits werden im erfindungsgemässen Schallschutz-Verbundsystem im Unterschied zu den aus dem Stand der Technik bekannten, schallschutztechnischen Massnahmen in Form einer zusätzlichen Einzelschicht, wie z.B. der Luftnoppenfolie gemäss den obgenannten beiden Schriften, oder einer Bedämpfungsschicht gemäss dem DE-U1-29820016 aus durch Polyurethan gebundenem Kork- und/oder Gummigranulaten bzw. aus modifiziertem Stuckgips die beiden an sich bekannten, für das Abstrahlverhalten schallharter Gehbeläge massgeblichen Einflussgrössen innere Schalldämpfung und Trittschallverbesserung durch die funktionelle Aufteilung auf mehrere separate Einzelschichten für den einzelnen Anwendungsfall optimierbar gemacht.

Die Materialien der unmittelbar auf der Unterseite des Gehbelages aufgeklebten ersten Dämpfungsschicht sollen vorzugsweise eine für Baustoffe hohe Dichte von grösser als 1600 kg/m³ und gleichzeitig einen inneren Verlustfaktor η_{INT} von 0,2 bis 6,0 aufweisen. Die im erfindungsgemässen Schallschutz-Verbundsystem vorgesehenen Dämpfungsschichten sollen vorzugsweise flächenbezogene Massen um 10 kg/m² oder, je nach Schichtdicke, auch darunter erzielen.

Das erfindungsgemässe Schallschutz-Verbundsystem wirkt schalltechnisch, also abgesehen von allfälligen wärmeschutz- und dampfdiffusionstechnischen Eigenschaften, in dreierlei Hinsicht, nämlich
a. vorrangig als raumakustische Massnahme zur Verbesserung des Abstrahlverhaltens dünner, steifer und schallharter Gehbeläge in den begangenen Raum selbst zur Vermeidung des für solche Bodenbeläge typischen, subjektiv äusserst unangenehmen Klapperns im oberen, bauakustisch relevanten Frequenzbereich,
b. als trittschallmindernde Massnahme zur Erzielung eines akzeptablen Trittschall-Verbesserungsmasses auch mit schallharten Gehbelägen (als Variante zu den hierfür in der Praxis meist verwendeten weichfedernden Gehbelägen),
c. zusätzlich auch als luftschallschutztechnisch wirksame Massnahme.

Das erfindungsgemässe Schallschutz-Verbundsystem erschliesst durch die Kombination einer dünnen, relativ leichten Lastverteilungsplatte mit einer Schall-Bedämpfungsschicht sowie mit einer speziell dimensionierten Luftnoppenfolie - die eine dynamische Steifigkeit von höchstens 20, vorzugsweise höchstens 10 MN/m³ aufweisen darf - die Vorteile zweischaliger Konstruktionen auch für Fussbodenaufbauten mit verhältnismässig geringen Flächenmassen der Einzelschichten. Im speziellen Fall übernimmt bereits ein dünner, ausreichend steifer Gehbelag selbst die Lastverteilungsfunktion.

Das erfindungsgemässe Verbundsystem weist beispielsweise von oben bzw. innen (also jeweils raumseitig) beginnend, im Sinne einer bauphysikalischen Gesamtoptimierung der angestrebten zweischaligen Estrichauflagen bzw. Decken- oder Wandverkleidungen im Hinblick auf wasserdampfdiffusionstechnische Anforderungen (klimabedingter Feuchtigkeitsschutz), den Trittschallschutz (Schallabstrahlung im Raum, Körperschallübertragung in benachbarte Räume) und einen erwünschten, zumindest bescheidenen Wärmeschutz gegenüber Wärmeableitung bzw. -transmission folgende Einzelkomponenten auf:
- gegebenenfalls eine Dampfbremse bzw. Dampfsperre (in einer möglichen Variante auch in Form eines Flächenheiz-Sandwichs gemäss den DE-A1-19823498, 19826544 oder 19836148);
- eine Bedämpfungsschicht mit hohem innerem Verlustfaktor η_{INT};
- eine Trittschallschutzschicht mit niedriger dynamischer Steifigkeit s', vorzugsweise aus mit Gas bzw. Luft gefüllten Noppenfolien.

Im Hinblick darauf, dass die durch das erfindungsgemässe Verbundsystem schalltechnisch zu veredelnden Gehbeläge und Wandverkleidungen auch unmittelbar über bzw. vor konstruktiven Aussenbauteilen angeordnet werden können, empfiehlt es sich, auf der Warmseite des Verbundsystems eine Dampfbremse bzw. Dampfsperre anzubringen, die andernfalls eventuell bis zu kalten Bauteilschichten eindiffundierenden Wasserdampf grundsätzlich vermindert oder noch besser verhindert, so dass damit eine unzulässige Kondensatbildung im Kern unterbunden wird, womit sich auch das Schimmelpilzrisiko minimiert.

Durch die Bedämpfungsschicht wird die Resonanzfrequenz und der Schallabstrahlgrad dünner, einschaliger, aber harter Bodenbeläge und Wandverkleidungen günstig beinflusst. Nach einer anderen Variante kann die Bedämpfungsschicht dann sogar raumseitig als oberste Schicht ausgebildet werden, wenn sie z.B. aus organischem Glas besteht, das den hohen inneren Verlustfaktor η_{INT}∼0.6 mit einer ausreichenden Oberflächenhärte und Lastverteilung verbindet.

Die dynamische Steifigkeit s' [MN/m³] von herkömmlichen, am Markt erhältlichen Trittschalldämmprodukten einer bestimmten Schichtdicke wird durch die Kombination aus der dynamischen Steifigkeit des Gerüstmaterials und der dynamischen Steifigkeit der sich zwischen diesem Material befindlichen Luft geprägt. Wesentlich ist, dass bei diesen Produkten die dynamische Steifigkeit der Luft wiederum stark dadurch beeinflusst ist, dass diese an den Randflächen konventioneller Trittschalldämmplatten austreten kann. Der vorliegenden Erfindung liegt die Erkenntnis zugrunde, dass funktionstüchtige - vorzugsweise rollbare - Trittschalldämmfolien mit einer relativ geringen Dicke von 5 bis maximal 20 mm (vorzugsweise etwa 10 mm) produziert werden können, mit denen eine dynamische Steifigkeit kleiner als 10 MN/ m³ dadurch zu erzielen ist, dass - anstelle von z.B. faserigen Dämmstoffen oder gewalkten zelligen Kunststoffschäumen - Kunststoff-Noppenfolien eingesetzt werden. Die mit Gas bzw. Luft gefüllten Noppen solcher erfindungsgemässen Trittschalldämmschichten sind für den Einsatz im Bauwesen - im Unterschied zu herkömmlichen, z.B. aus der Verpackungsindustrie oder für den Einsatz im Bereich von Schuheinlagsohlen aus der US-A-5,584,130 bekannt gewordenen Luftnoppenfolien - in ihrem Durchmesser, ihrer Höhe und ihrem Abstand zueinander gezielt so abgestimmt, dass die Kombination aus der Gerüststeifigkeit der verwendeten Kunststoff-Folie, der dynamischen Steifigkeit des in den Noppen eingeschlossenen Gases (Luft), und schliesslich auch der sich im eingebauten Zustand zwischen den Noppen befindlichen Luft, eine dynamische Steifigkeit kleiner als 20, vorzugsweise ≤ 10 MN/m³ ergibt. Dies kann entweder bereits mittels einer einlagigen Noppenfolie oder aber auch durch die Kombination von zwei oder mehreren Noppenfolien erzielt werden.

Neben der Kenngrösse dynamische Steifigkeit s' spielt im praktischen Einsatz von Trittschallschutz-Noppenfolien im Bauwesen selbstverständlich auch deren Standfestigkeit eine entscheidende Rolle. Hiefür ist die Dicke der verwendeten Kunststoff-Folien selbst entsprechend so zu wählen, dass der Füllgrad der Noppen über den relevanten Zeitraum hinweg ausreichend konstant und die Belastbarkeit der Noppenfolie im eingebauten Zustand ausreichend gross und stabil bleibt.

Der zu erzielende Wärmeschutz dünner Trittschall-Noppenfolien kann durch eine Kaschierung mit Deckschichten verbessert werden, wenn deren den Noppen zugewandte Oberfläche einen hohen relativen Emissionskoeffizienten εᵣ (möglichst nahe an 1) aufweist. Damit kann nämlich der durch Wärmestrahlung bedingte Anteil der allgemein auch noch durch Konvektion und Wärmeleitung verursachten Gesamt-Wärmeübertragung über die zwischen den Noppen stehende Luftschicht minimiert werden.

Die Erfindung wird anhand der beiliegenden Zeichnung beispielhaft näher erläutert. Es zeigen
die Fig.1 bis 4 in diagrammatischer Sicht die Auswirkung des erfindungsgemässen Schallschutz-Verbundsystems im Vergleich zu herkömmlichen Konstruktionen;
die Fig.5 verschiedene Varianten der Erfindung im Querschnitt;
die Fig.6 ein Ausführungsbeispiel einer Doppel-Luftnoppenfolie zur Durchführung der Erfindung.

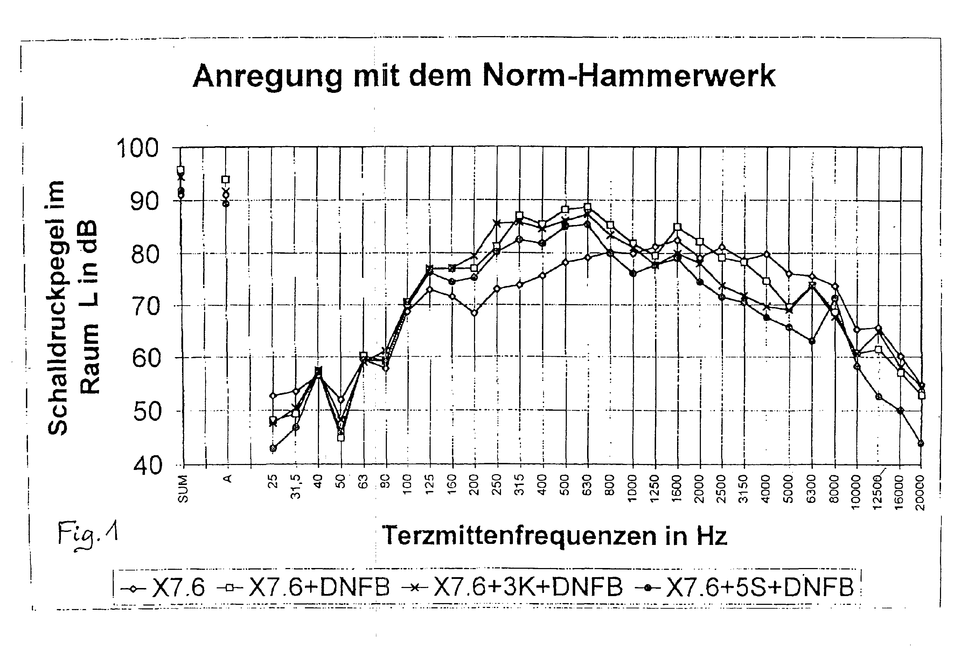

In Fig.1 sind für jeweils denselben steifen, schallharten Gehbelag X7.6 (eine hochdichte Faserplatte mit 1 mm Kunststoff-Laminat-Auflage, insgesamt 7.6 mm dick) die Verläufe der sich im begangenen Raum, in 1 m Abstand vom Normhammerwerk, einstellenden Schalldruckpegel (in dB) aufgetragen, und zwar in Abhängigkeit von den Terzmittenfrequenzen in Hz. Zu Vergleichszwecken wird trotzdem das wie vorerwähnt für die Raumakustik nur beschränkt relevante Norm-Hammerwerk verwendet, und zwar für die vier Varianten
- Belag X7.6 allein;
- Belag X7.6 mit einer ca. 10 mm dicken Doppel-Luftnoppenfolie DNFB (s' ∼ 20 MN/m³);
- Belag X7.6 mit einer 3 mm Korkmatte 3K, die eine Dichte von 890 kg/m³ (entsprechend einer flächenbezogenen Masse von 2,67 kg/m²) und einen inneren Verlustfaktor η_{INT} von lediglich ca. 0,16 aufweist, und derselben Luftnoppenfolie DNFB;
- Belag X7.6 mit einer 5 mm Bitumenmatte 5S, die eine Dichte von 2008 kg/m³ (entsprechend einer flächenbezogenen Masse von 10,04 kg/m²) und einen inneren Dämpfungsfaktor von 4,0 aufweist, und derselben Luftnoppenfolie DNFB.

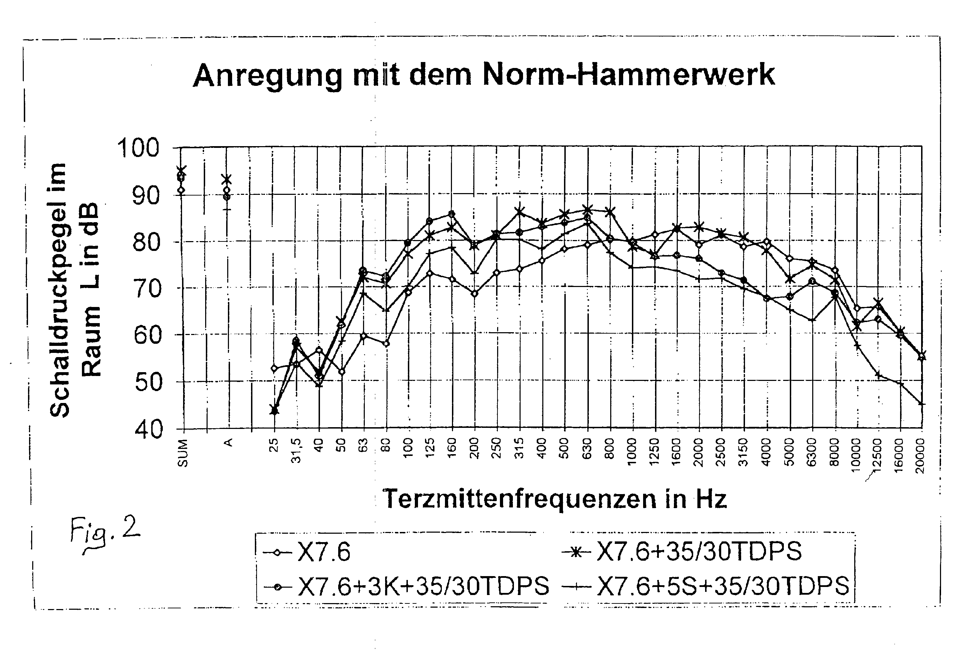

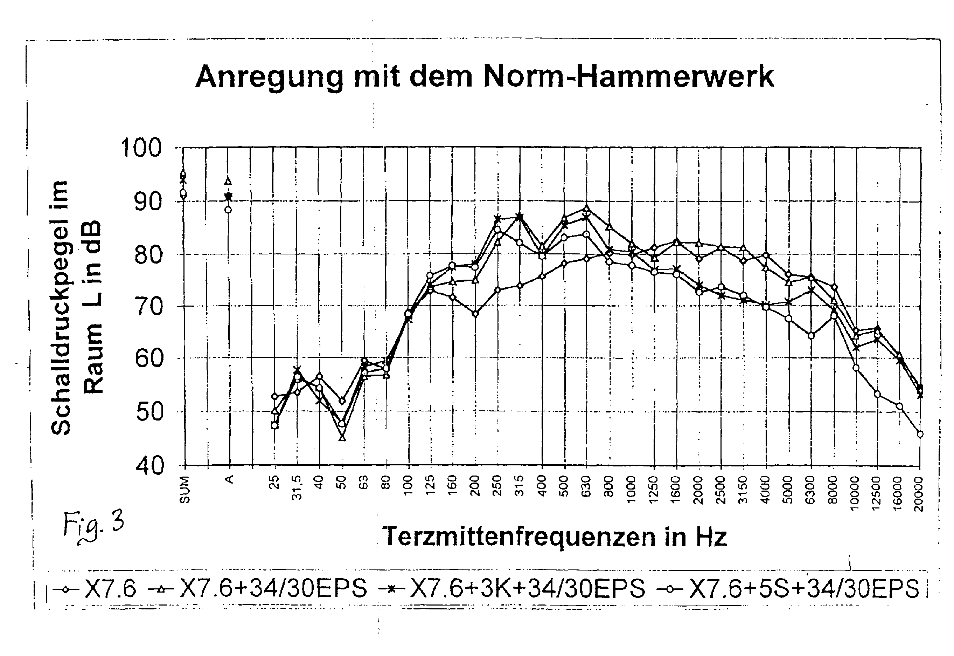

Analog finden sich in Fig.2 die Werte, wenn statt der Luftnoppenfolie DNFB eine Mineralfaser-Dämmstoffplatte TDPS 35/30 mm (s' ∼ 7,5 MN/m³), in Fig.3 eine Trittschall-Dämmplatte aus expandiertem Polystyrol EPS 34/30 mm (s' ∼ 10 MN/m³) eingesetzt wird.

Aus jeder der drei Abbildungen ist deutlich zu erkennen, dass die vorangehend beschriebene erreichte Absenkung der resultierenden Lautheitspegel im Raum erst über die erfindungsgemässe spezielle Abstimmung der einzelnen Schichten des Schallschutz-Verbundsystems dadurch erzielt wird, dass
- einerseits durch eine ausreichende akustische Bedämpfung des dünnen steifen Gehbelages dessen Schwing- und damit Abstrahlverhalten, insbesondere im für solche Gehbeläge relevanten Frequenzbereich oberhalb von 800 Hz, günstig beeinflusst wird (deutlich um bis zu 10 dB niedrigere Schalldruckpegel im Raum) und
- andererseits die Resonanzfrequenz des Verbundsystems (jeweils im Bereich von ca. 250 Hz bis 630 Hz) gegenüber der Resonanzfrequenz des "nackten" steifen, schallharten Gehbelages (mit einem Plateau im Bereich von 1000 Hz bis 4000 Hz) deutlich zu niedrigeren Frequenzen hin verschoben ist.

Durch die in der Praxis stets gegebene Überlagerung dieser beiden Effekte können zusätzlich schliesslich auch noch die bekannten - subjektiv äusserst unangenehmen - hochfrequenten Klappergeräusche beim Begehen dünner steifer Gehbeläge unterdrückt werden. Diese Anforderung stellte eben den Ausgangspunkt für die Entwicklung des erfindungsgemässen Verbundsystems dar.

Es ist deutlich zu erkennen, dass gegenüber dem frequenzabhängigen Verlauf der unter Anregung eines am Markt erhältlichen dünnen schallharten Gehbelages X7.6 mit einem Normhammerwerk ermittelte Schalldruckpegel im Raum [in dB], die beiden weiteren Verläufe durch die erfindungsgemässe Kombination insbesondere im höheren Frequenzbereich (über 1000 Hz) deutlich absinkt. Im tieferen Frequenzbereich wird das erfindungsgemässe Schallschutz-Verbundsystem erst durch Optimierung eine solche Absenkung bewirken.

Diese Optimierung erfolgt durch eine spezielle Dimensionierung der Luftnoppenfolie, in Richtung zu kleinen dynamischen Steifigkeiten unter 10 MN/m³ hin; damit wird die Resonanzfrequenz des gesamten Verbundsystems so weit nach unten gedrückt, dass der an sich im oberen Frequenzbereich erzielte starke Abfall der Schalldruckpegel schon im tiefen Frequenzbereich einsetzt. Damit wird dann zusätzlich dazu, dass unangenehmes Klappern beim Begehen der Bodenbeläge verhindert wird, auch der resultierende Schalldruckpegel im Raum deutlich abgesenkt.

Das erfindungsgemässe Schallschutz-Verbundsystem ist nicht nur für Bodenbeläge aus Press-Spanplatten einsetzbar, sondern prinzipiell auf alle Fussbodenaufbauten ohne schwimmenden Estrich, aber immer nur mit lastverteilenden Gehbelägen, anwendbar.

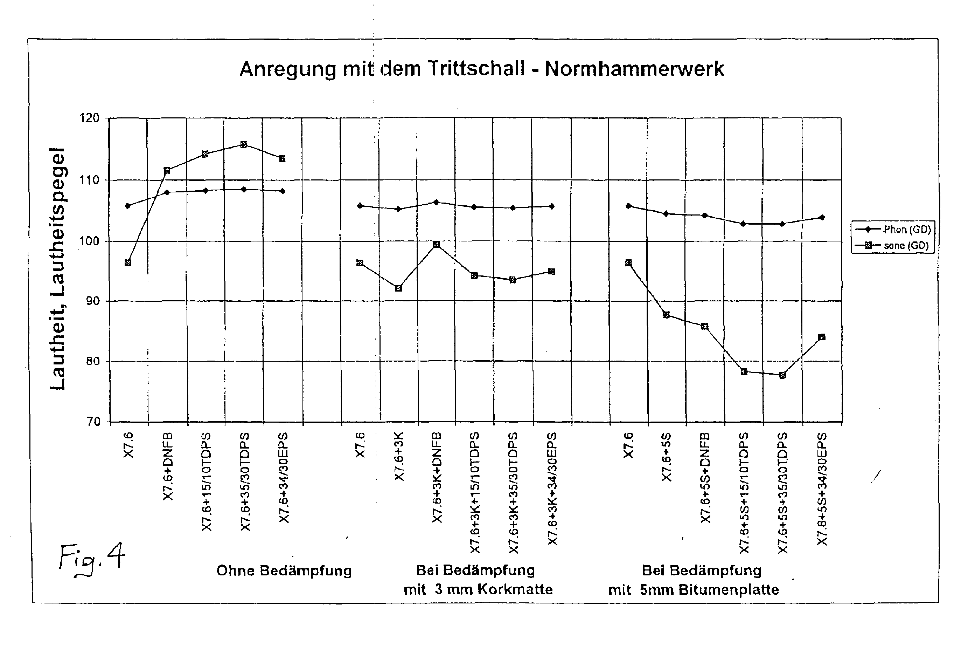

In der Fig.4 sind die ausgehend vom unbedämpften steifen, schallharten Gehbag durch die Kombination dieses Belages mit zwei verschiedenen Bedämpfungsmaterialien (Kork, Bitumen) sowie mit insgesamt vier trittschallschutztechnisch wirksamen Schichten (zusätzlich zu den oben in den Fig.1 bis 3 genannten noch eine Mineralfaser-Dämmstoffplatte TDPS 15/10) im Labortest erzielten Verbesserungen in drei Gruppen zusammengestellt. Die drei Gruppierungen entsprechen den Situationen
- unbedämpfter Bodenbelag (links),
- Bodenbelag mit einer 3 mm dicken Korkschicht bedämpft (Mitte), sowie
- Bodenbelag mit einer 5 mm dicken Bitumenschicht bedämpft (rechts).
   Die dynamischen Steifigkeiten der verwendeten drei unterschiedlichen Trittschallmaterialien sind wie oben unter den Fig.1 bis 3 angeführt. Offensichtlich wegen des doch noch relativ niedrigen inneren Verlustfaktors η_{INT} von Kork ist der damit zu erzielende Effekt allerdings noch unbefriedigend, dieses Material in dünnen Schichtstärken daher nicht bevorzugt.

Die der Wahl des gegenständlichen Schallschutz-Verbundsystems zugrundeliegende Erkenntis, dass auch die innere Dämpfung der Trittschallschutzschicht noch eine wesentliche Rolle im Hinblick auf das Abstrahlverhalten eines Gehbelages spielt, ist messtechnisch dadurch belegt, dass die beiden entsprechenden Lautheitspegel (in sone) bei Verwendung von Mineralfaser-Trittschallplatten (TDPS 35/30 und TDPS 15/10) unterschiedlicher Dicke - aber mit gleicher dynamischer Steifigkeit von 7,5 MN/m³ - praktisch gleich hoch sind.

Die lediglich ca. 10 mm dicke und damit Konstruktionshöhe sparende Doppel-Luftnoppenfolie DNFB führt trotz ihrer noch relativ hohen dynamischen Steifigkeit von s' ∼ 20 MN/m³ im Vergleich zur Verwendung einer rund dreimal so dicken marktüblichen Trittschalldämmplatte aus expandiertem Polystyrol (EPS 34/30, s' ∼ 10 MN/ m³) zu einem um nur 1,8 sone, also unwesentlich, höheren Lautheitspegel im Raum. Auch dieser Effekt ist physikalisch nur dadurch zu erklären, dass die Doppel-Luftnoppenfolie selbst über die zahlreichen Kunststoff-Materialstege eine hohe innere Dämpfung aufweist, die schliesslich für das - auch für den Fachmann -vergleichsweise überraschend günstige Messergebnis bezüglich des in den Raum abgestrahlten Schalles verantwortlich ist.

Um die Auswirkungen der erfindungsgemässen schallschutztechnischen Massnahmen zur vorwiegenden Verbesserung des Abstrahlverhaltens (Raumakustik) dünner steifer Gehbeläge auf das subjektive Hörempfinden eines Bewohners deutlicher zum Ausdruck zu bringen, wurden die für die einzelnen Kombinationen des Verbundsystems zunächst gemessenen resultierenden Schalldruckpegel (in dB) auf die für das Hörempfinden des menschlichen Ohres massgeblichen Einheiten Phon (Lautheit) bzw. sone (Lautheitspegel) umgerechnet.

Die erste (linke) Gruppe der Lautheitspegel zeigt deutlich, dass die zunächst naheliegende Kombination des dünnen steifen Gehbelages mit ausschliesslich einer Trittschallschutzschicht anstelle einer erwünschten Verminderung des resultierenden Schallpegels im Raum sogar eklatante Verschlechterungen der raumakustischen Situation bewirkt, die sogar umso grösser sind, je kleiner (also an sich günstiger) die dynamische Steifigkeit der verwendeten Trittschalldämmschicht ist.

Die mittlere Gruppe gibt die Situation wieder, wenn der Gehbelag zunächst mit einer 3 mm dicken Korkschicht unterseitig bedämpft und dann wiederum mit den vier unterschiedlichen Trittschallschichten kombiniert wird. Durch die akustische Bedämpfung des Gehbelages mit der Korkschicht werden die sich bei Anregung mit dem Normhammerwerk einstellenden Lautheitspegel in Kombination mit den Trittschallschutzmaterialien zwar herabgesetzt, im Vergleich mit dem unbedämpften Gehbelag allein kommt es aber zu keiner nennenswerten Abminderung des Lärmpegels im Raum.

In der (rechten) dritten Gruppierung, welche den Schicht-Anordnungen nach dem erfindungsgemässen Schallschutz-Verbundsystem entspricht, liegen hingegen die Lautheitspegel im begangenen Raum um 10 bis 20 sone niedriger als im Falle eines unbedämpften Gehbelages allein. Die wirksamste nachgewiesene Absenkung des Lautheitspegels um 20 sone bedeutet eine subjektive Verbesserung um ca. 20 %; sie wird durch den Einsatz eines Trittschalldämmstoffes mit einer dynamischen Steifigkeit ≤ 10 MN/m³ erzielt.

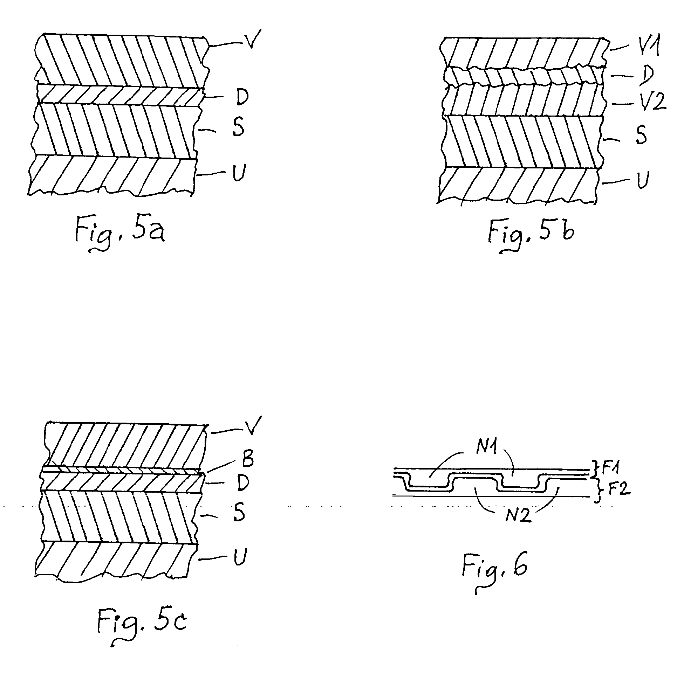

Die erfindungsgemässe Bedämpfungsschicht D kann in verschiedener Weise angeordnet werden, wie aus Fig.5 ersichtlich. Sie kann entweder mit der Unterseite der Verkleidungsschicht V, oder mit der Oberseite der Trittschall-Dämmschicht S, deren Unterseite auf dem Unterboden U aufliegt, z.B. durch Verklebung, festhaftend verbunden sein (Fig.5a); sie kann aber auch als Kern der Verkleidungsschicht V ausgebildet oder zwischen zwei von deren Lagen V1, V2 angeordnet sein (Fig.5b). Zwischen der Verkleidungsschicht V und der Bedämpfungsschicht D kann eine Dampfbremse bzw. Dampfsperre B - gegebenenfalls in Form einer Heizfolie oder zusätzlich zu einer Heizfolie - angeordnet sein (Fig.5c). Die aus Fig.5 ersichtlichen Dickenverhältnisse sind nicht einschränkend zu verstehen. So kann z.B. die Verkleidungsschicht V in Fig.5a dünner (z.B. als 5 mm dicke Hartfaserplatte oder als Laminatschicht, solange sie nur lastverteilend wirkt) als die Bedämpfungsschicht D ausgebildet sein, während die letztere als (wesentlich dickere) Tragschicht ausgebildet ist, die durch die spezielle Auswahl von Zuschlagstoffen den gewünschten hohen inneren Verlustfaktor η_{INT} erhält.

In Fig.6 ist ein Beispiel für die erfindungsgemäss bevorzugte Doppel-Luftnoppenfolie im Querschnitt dargestellt. Dabei sind zwischen den beiden Folien einer Luftnoppenfolie F1,F2 Luftspalte nur in der Zeichnung zwecks besserem Verständnis ausgebildet; in Wirklichkeit sind die beiden Luftnoppenfolien zwischen den Noppen natürlich miteinander verschweisst. Die Noppen N1 einer Luftnoppenfolie F1 greifen - z.B. schachbrettartig oder im Sechseckverbund - zwischen die Noppen N2 der anderen Luftnoppenfolie F2. Zur Erzielung noch geringerer dynamischer Steifigkeit werden die Noppendimensionen und -abstände, sowie die Lagenzahl und allfällige Zwischenlagen entsprechend gewählt.

Durch die z.B. an der Unterseite des Gehbelages aufgeklebte erfindungsgemässe Dämpfungsschicht aus Materialien sehr hoher Dichte wird die flächenbezogene Masse des dünnen Gehbelages - bzw. auch im Anwendungsfall einer dünnen Wandverkleidung deren Masse - so entscheidend erhöht, dass damit in Verbindung mit der niedrigen dynamischen Steifigkeit der trittschalltechnisch wirksamen Schicht des Schallschutz-Verbundsystems und in Kombination mit massiven Unterkonstruktionen (auch im Wand- bzw. Deckenbereich) eine so niedrige Resonanzfrequenz des Gesamtsystems erzielt wird, dass dieses grundsätzlich auch luftschalltechnisch wirksam oder als schallschluckender Platten-Absorber für raumakustische Zwecke einsetzbar ist.

## Patentansprüche

1. Schallschutz-Verbundsystem für Raumbegrenzungsflächen, bestehend aus einer mit der jeweiligen Boden-, Wand- oder Deckenverkleidung (V) in Verbindung stehenden Bedämpfungsschicht (D), die vorzugsweise einen inneren Verlustfaktor η_{INT} von mindestens 0.1, insbesondere von mindestens 0.2 aufweist, und einer an der dem Raum abgekehrten Seite der Boden-, Wand- oder Deckenverkleidung (V) bzw. der Bedämpfungsschicht (D) an diese anschliessenden Trittschalldämmschicht (S), die eine dynamische Steifigkeit s' von höchstens 20 MN/m³, vorzugsweise von höchstens 10 MN/m³, aufweist.

2. Schallschutz-Verbundsystem nach Anspruch 1, dadurch gekennzeichnet, dass die Boden-, Wand- oder Deckenverkleidung (V) ein Plattenbelag einer Dicke von höchstens 40 mm, vorzugsweise höchstens 20 mm, insbesondere höchstens 10 mm ist.

3. Schallschutz-Verbundsystem nach Anspruch 2, dadurch gekennzeichnet, dass der Plattenbelag (V) zweiteilig ausgebildet und wenigstens eine Bedämpfungsschicht (D) zwischen den beiden Teilen (V1, V2) angeordnet ist.

4. Schallschutz-Verbundsystem nach Anspruch 2, dadurch gekennzeichnet, dass der Plattenbelag (V) zweiteilig ausgebildet und einer der Teile als Bedämpfungsschicht (D) ausgebildet ist.

5. Schallschutz-Verbundsystem nach einem der vorhergehenden Ansprüche, dadurch gekennzeichnet, dass zwischen der Boden-, Wand- oder Deckenverkleidung (V) und der Bedämpfungsschicht (D) eine Dampfbremse oder Dampfsperre (B) - gegebenenfalls in Form einer oder zusätzlich zu einer Heizfolie - angeordnet ist.

6. Schallschutz-Verbundsystem nach einem der vorhergehenden Ansprüche, dadurch gekennzeichnet, dass die Trittschall-Dämmschicht (S) als Mehrfach-Luftnoppenfolie - gegebenenfalls mit wenigstens einer Zwischenlage - ausgebildet ist.

7. Schallschutz-Verbundsystem nach Anspruch 6, dadurch gekennzeichnet, dass zwei Luftnoppenfolien (F1,F2) gegengleich derart aufeinander liegen, dass die Noppen (N1) der einen Luftnoppenfolie (F1) in die Zwischenräume zwischen den Noppen (N2) der anderen Luftnoppenfolie (F2) eingreifen.

8. Schallschutz-Verbundsystem nach einem der vorhergehenden Ansprüche, dadurch gekennzeichnet, dass die Bedämpfungsschicht (D) eine Dichte von > 1600 kg/m³, vorzugsweise von > 2000 kg/m³, und/oder ein Flächengewicht von > 5 kg/m², vorzugsweise von > 10 kg/m², aufweist.
